# EUROPEAN PATENT SPECIFICATION

(11) **EP 3 314 718 B1**
(45) Date of publication and mention of the grant of the patent: **25.01.2023**
(21) Application number: 16732731.1
(22) Date of filing: 27.06.2016
(51) Int. Cl.: H02J 7/00

(54) **BATTERY BALANCING CIRCUIT**
BATTERIEAUSGLEICHSSCHALTUNG
CIRCUIT D'ÉQUILIBRAGE DE BATTERIE

(30) Priority: 26.06.2015 GB 201511279
(43) Date of publication of application: 02.05.2018
(73) Proprietor: Lyra Electronics Limited, Solihull, West Midlands B90 3AD (GB)
(72) Inventor: JAMES, Peter, Balsall Common West Midlands CV7 7EU (GB); EVANS, Michael, Stoneleigh Warwickshire CV8 3BZ (GB)
(74) Representative: Mansfield, Peter Turquand
(86) International application number: PCT/GB2016/051914
(87) International publication number: WO 2016/207663

(56) References cited:
- EP-A2- 2 804 286
- WO-A1-2014/040172
- WO-A1-2014/209161

## Description

This invention relates to an active battery balancing circuit, a power source comprising a battery and an active balancing circuit and a method of balancing an electric charge in a plurality of cells in a battery.

Rechargeable batteries can be used as a power source for various devices, from small devices having a relatively low power consumption such as mobile phones, digital cameras and media players to devices that have a high power consumption and/or require a voltage of up to several hundred volts, such as electric vehicles and hybrid vehicles, in particular electric and hybrid cars. The batteries may be used in fields such as transport, defence, aerospace and green energy storage for example. Besides lead acid batteries, nickel cadmium batteries, and nickel metal hydride batteries, lithium ion batteries have recently gained popularity due to their high energy-to-weight ratio, absence of memory effect and slow loss of charge when not in use.

In applications where the voltage required is greater than the voltage of a single cell (approximately 2V for a lead acid cell, 1.2V for nickel cadmium and nickel metal hydride cells, and approximately 3.6V for lithium ion cells), a plurality of cells will be electrically connected in series. For achieving higher operating voltages of about 200-300V (or even higher in some cases), as may be used in electric or hybrid car applications, stacks comprising many cells which are electrically connected in series are used.

Battery cells may be damaged when they are used outside an allowable voltage range, both when they are charged to a voltage that is greater than a maximum allowed voltage (overcharged), and when they are discharged so that the voltage of the cell is smaller than a particular minimum voltage that depends on the type of the cell. Lithium ion cells can be particularly susceptible to damage outside of an allowable voltage range.

In a battery that is formed from a plurality of cells, although the cells may be marked as having the same capacity, in reality individual cells can have a different capacities, this may be due to initial production tolerances, uneven temperature distribution in the battery, material impurities, surface contamination and/or differences in the aging characteristics of the cells. Moreover, the individual cells in a battery may have a different state of charge, due to fluctuations that may occur in the charge or discharge process of the battery.

If there is a degraded cell having a diminished capacity in the battery, or a cell having a higher charge than the other cells, there is a danger that once such a cell has reached its full charge, it will be subject to overcharging until the other cells of the battery reach their full charge. The result can be temperature and pressure build up and possible damage to the cell. During discharge, a cell having a smaller capacity than the other cells, or a lower charge, will have the greatest depth of discharge and will tend to fail before the other cells. It is even possible for the voltage on the cell(s) having the lowest state of charge and/or the smallest capacity to be reversed as the cell(s) become fully discharged before the rest of the cells, which may lead to a premature failure of the cell.

For overcoming these problems, it has been proposed to balance the charge of the individual cells, using specific charge balancing circuits connected to the cells of a battery and/or incorporated into the battery. Such charge balancing circuits can be classified as passive and active balancing circuits.

US 6271645 and US 5498950 describe alternative battery balancing apparatus and associated methods of operation. US 2012/0194133 describes a battery balancing method using a DC/DC voltage convertor and a DC balancing bus. EP 2 804 286 describes a cell balancing circuit in which a plurality of cells within a tray are charged by a DC/DC converter and a linear current source; power to the DC/DC converter is provided via a DC energy storage system, which itself is powered from the mains by an AC/DC converter. The DC energy storage system may be connected by a DC grid to DC/DC converters arranged to charge cells in other trays. EP 2 804 286 describes as prior art a circuit in which individual cells are each provided with their own DC/AC power source, which leads to high installation costs and a large space. WO 2014/209161 describes a battery management system in which each cell is equipped with a DC/AC converter.

Aspects of the invention are disclosed in independent claims 1 and 8.

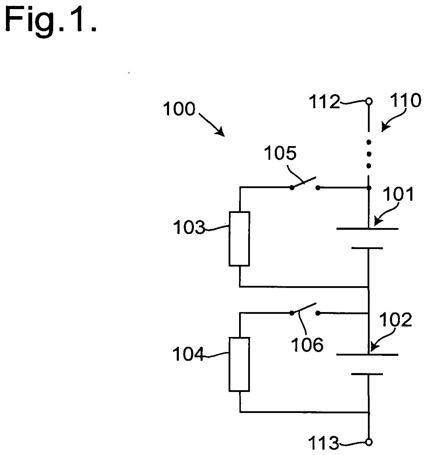

A passive battery balancing circuit according to the state of the art will be described with reference to FIG. 1.

In FIG. 1, reference numeral 110 denotes a battery comprising a plurality of cells 101, 102 that are electrically connected in series between a positive pole 112 and a negative pole 113 of the battery 110. In addition to cells 101, 102, further cells can be present in the battery 110, as schematically indicated by three dots between cell 101 and the positive pole 112.

Each of the cells 101, 102 has a positive pole and a negative pole. In accordance with conventional circuit symbols, cells 101, 102 are shown as a pair of parallel lines, wherein the longer line denotes the positive pole, and the shorter line denotes the negative pole.

A passive balancing circuit 100 is connected to the battery 110. The balancing circuit 100 comprises a plurality of bypass resistors 103, 104 and switches 105, 106. The switches 105, 106 can be solid state switches, each comprising one or more transistors, and can be operated by a control circuit (not shown) of the balancing circuit 100.

By closing a respective one of the switches 105, 106, each of the bypass resistors 103, 104 can be connected between the poles of one of the cells 101, 102. For example, by closing the switch 105, the bypass resistor 103 can be connected between the poles of the cell 101. If this is done while the battery 111 is charged, a part of the current applied to the battery 111 flows through the bypass resistor 103 instead of flowing into the cell 101, such that the cell 101 is charged to a smaller extent than it would be if the switch 105 were open. If the switch 105 is closed while the battery 111 is discharged, or while the battery 111 is idle, a current can flow between the positive and the negative pole of the cell 101 through the bypass resistor 103, such that the cell 101 is discharged. In either case, by closing the switch 105, the amount of charge in cell 101 is reduced compared to a case wherein the switch 105 is open. Thus, the charge of the cells 101, 102 can be balanced by closing switches associated with cells having a particularly high state of charge, for selectively reducing the amount of charge stored in these cells relative to the charge of other cells of the battery 110.

A disadvantage of this approach is that passive charge balancing leads to a loss of energy in the battery 110, since energy is converted to heat in the bypass resistors 103, 104. This is not only inefficient but also requires a large area or volume to expel the heat and a large volume to house the resistors. In addition, as the cell capacity increases, the space required by the balancing circuitry becomes prohibitive because of the size of the resistors, and also the volume required for dealing with the generated heat. This project addresses the need for an efficient balancing system by using the proposed novel active balancing technology, consisting of a DC-DC converter to move energy between the cells.

For avoiding such a loss of energy, active battery balancing has been proposed, wherein charge and energy are transferred between the cells 101, 102 of a battery 110, whilst the cells are being charged and discharged, rather than the energy simply being dissipated as heat as in the passive balancing systems.

An aim of this invention is to provide an active battery balancing circuit as defined in the claims. The circuit comprises: a first battery unit; at least one further battery unit, separate bi-directional voltage converters connected to each battery unit for converting DC to AC in a first direction, and vice versa in the opposite direction; an AC balancing bus connecting each bi-directional voltage converter and a control microprocessor;
wherein said balancing circuit is configured to a) provide excess DC current flow from a battery unit to one of said bi-directional voltage converters; b) convert said excess DC current to AC current and provide this to said AC balancing bus; c) provide said excess AC current in said AC balancing bus to one of said bi-directional voltage converters; d) convert said excess AC current to DC current using said bidirectional voltage converter and return said converted DC current to a battery unit that requires additional charge; and wherein said voltage converter is a planar transformer; said circuit further comprises battery balance monitoring means connected between said battery sub-units and said voltage converter; and said battery balance monitoring means comprises: monitoring means connected to each said battery unit, switch means connected between said monitoring means and said voltage converter. Preferably, said monitoring means further comprises a resistor connected to said switching means.

In a further embodiment of the invention the balancing circuit further comprises control means connected to said balancing bus.

In an embodiment of the invention said battery units are Li-ion battery units.

In an embodiment of the invention the active battery balancing circuit may further comprise a separate communication bus. Alternatively, the balancing bus of said active battery balancing circuit may operate as the communication bus.

In a further embodiment of the invention there is provided a method of balancing a battery using an active battery balancing circuit substantially as described above, comprising the steps of: providing power to a first battery unit; diverting excess charge from said first battery unit to a bi-directional DC/AC voltage converter and converting to AC current; diverting said converted AC current to an AC balancing bus; diverting said AC current from said balancing bus to a bi-directional AC/DC voltage converter for conversion to DC current; diverting said converted DC current to one of said battery units. Each battery unit comprises multiple cells.

In a further preferred embodiment of the invention, a control microprocessor controls the flow of excess charge between said balancing bus and said battery units.

### Description of the drawings

The present invention will now be described in more detail, by way of example only with reference to the accompanying figures in which:
Figure 1 shows a passive battery balancing circuit known from the prior art;
Figure 2 is a schematic of an active battery balancing circuit of this invention;
Figure 3 shows another schematic of the active battery balancing circuit of this invention.

### Specific Description

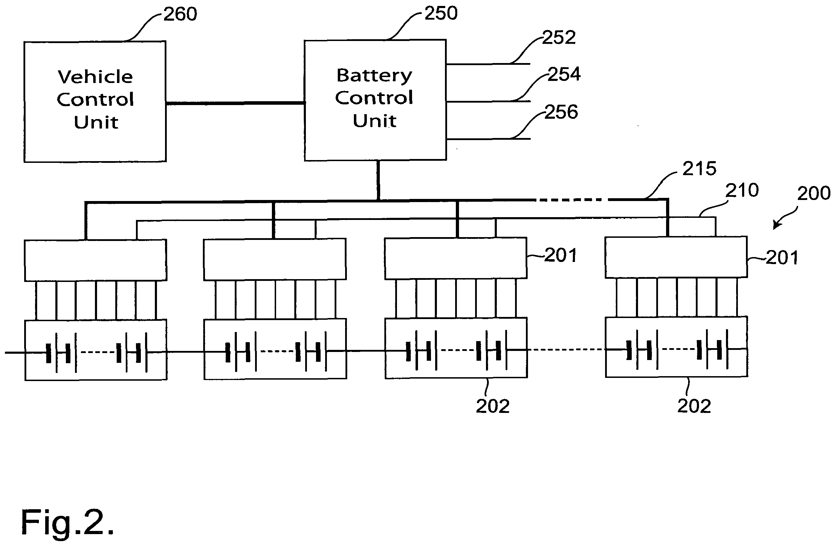

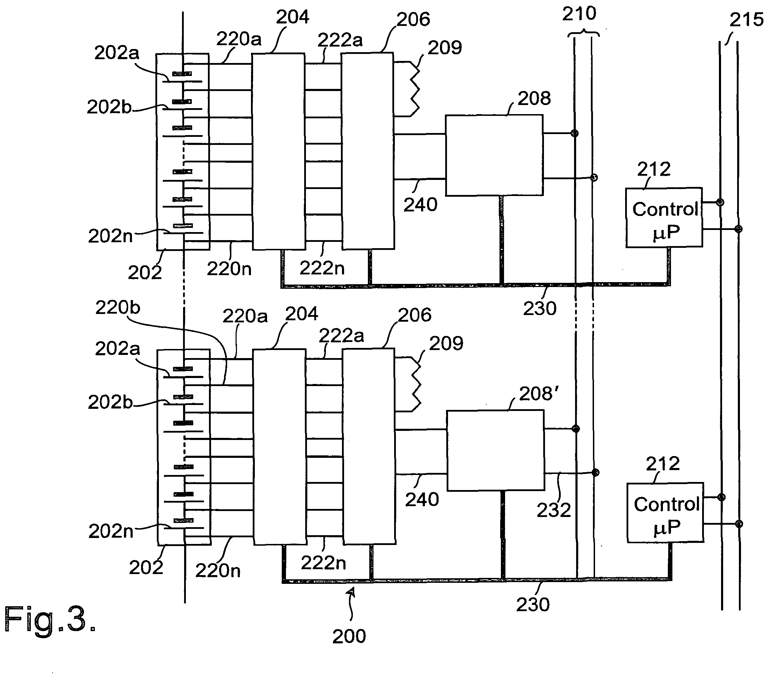

Figures 2 and 3 show a schematic circuit diagram of the active battery balancing circuit if this invention.

Balancing circuit 200 comprises a number of batteries 202 (each comprises a number of cells 202a-202n), arranged in series. Preferably, the batteries are Li-ion batteries, but this circuitry will work with other battery types such as lead acid batteries, nickel-cadmium batteries or nickel-metal hydride batteries or others. As shown in figure 2, there are four batteries 202 each connected to a battery balancing monitoring module 201. However, further batteries 202 may also be provided, and connected as described below. Each of the battery balancing modules 201 is connected to an AC balancing bus 210, which joins all of the battery balancing modules together. CAN communication bus 215 is also connected to each of the battery balancing modules 201 as well as to a battery control unit 250. The balancing bus 210 is also connected to the battery control unit 250, which is connected to cooling control means (not shown) via pathway 252, heating control means (not shown) via pathway 254 and to charging control means (not shown) via pathway 256. The battery control unit may also be connected to other control units (also not shown). Battery control unit 250 is also connected to a separate vehicle control unit 260, if the battery is intended to be for use in a vehicle. Preferably, the control unit 250 is located remotely from the balancing circuit, but this may not be the case for all embodiments of the invention.

In an alternative embodiment of the invention a single bus may be provided which operates as a balancing bus 210 and also a communications bus 215. In this embodiment, the separate balancing bus 210 and communication bus 215 will not be required. The use of only a single bus in this embodiment for both battery balancing and communication will reduce the wiring required for the system and will also reduce the overall cost of the system.

Figure 3 shows the battery balancing circuit 200 and battery balance monitoring module 201 in more detail. In particular, the battery balancing monitoring module 201 comprises monitoring means 204, switch matrix 206, resistor means 209 and voltage converter means 208, 208'.

As shown in figure 3, there are two battery units 202, but, as indicated by the dashed line between the units, more battery units 202 can be provided if required and connected as described below. As shown, each unit 202 has six battery cells 202a-202n explicitly illustrated within the unit 202, but again, as indicated by the dashed line within the battery 202, more cells may be provided if required for each battery 202. Each cell 202a-202n is connected to the monitoring means 204, via a pathway 220a-220n. The monitoring means 204 is connected to switch matrix 206 via pathways 222a-222n (which align with pathways 220a-220n). At one end of the switch matrix 206 is a dump resistor 209, this resistor is optional and is not required for all embodiments of the invention. The dump resistor 209 is only required when all of the cells 202a-202n are fully charged, and excess charge has to be dumped from the battery, rather than be balanced to a different cell of the battery.

Each switch matrix 206 is connected to voltage convertor 208, and both voltage convertors are connected to balancing bus 210 via pathways 232. Preferably, the voltage convertor 208 is a planar transformer, as this is a much more compact unit, and this will allow the overall circuitry to be greatly reduced in size. In this embodiment of the invention, the voltage converter 208, 208' is a bi-directional DC-AC voltage converter that operates as a DC-AC converter in a first direction and as an AC-DC convertor in the opposite direction. Also shown is connection 230 which connects the monitoring means 204 and the switch means 206 to the DC balancing bus 210 and also to control microprocessor 212, as well as CAN communication bus 215. As in figure 3, the balancing bus 210 and communication bus 215 may be combined into a single bus for both functions thus reducing wiring required and lowering the cost.

In operation, as the batteries 202 are charged (power source not shown), the monitoring means 204 monitors the charge in each of the cells 202a-202n, and once one of the cells 202a-202n of battery 202 reaches its maximum capacity (and therefore will prevent the remainder of the cells charging), the switch matrix 206 will operate to divert any excess charge from the fully charged cell 202a-202n, to the voltage convertor 208, to allow the remaining cells 202a-202n in the cell 202 to continue charging. This excess charge will be provided to the bi-directional DC-AC voltage convertor 208, 208' to be converted from DC to AC current (the voltage convertor 208, 208' operating in a first direction) which is then provided to the balancing bus 210. The excess AC charge that is diverted away from the original battery via voltage converter 208 can be shifted to a different battery 202 rather than simply being dissipated as heat for example. In this embodiment, the excess charge is provided from the DC-AC convertor pathway of voltage convertor 208, 208' to balancing bus 210. This AC current can then be transferred from the balancing bus 210 back to a battery 202. This will happen by transferring the AC current to bi-directional voltage convertor 208, 208', where the AC-DC convertor pathway (in the opposite direction to the DC-AC conversion path) will convert the AC current from the balancing bus 210 back to DC which is then provided back to a cell 202a-202n of a battery 202 that requires additional charge. It may be that the excess charge is transferred to a different battery 202, or is transferred to a different cell 202a-202n within the battery 202 containing the original cell 202a-202n. Moving charge between cells 202a-202n rather than simply dissipating excess charge as heat ensures less energy is wasted overall as the battery 202 is charged. This will result in a lower charging time for the battery and eventually, to a reduced cost to the consumer.

In an embodiment of the invention, the microprocessor 212 is a field programmable gate array (FPGA). The switching waveforms generated by the FPGA drive the voltage convertor 208, 208' and control the flow of charge through the voltage convertor 208, 208'. The use of an FPGA in the microprocessor 212 makes the control of the battery power more accurate. In an embodiment of the invention, the microprocessor 212 may alternatively comprise a complex programmable logic device (CPLD) or an application specific integrated circuit (ASIC).

To reduce the cost of the battery balance circuit 200, the cells 202a-202n are grouped together as shown (in batteries 202) and are provided with one voltage convertor 208, 208' per group. The switch matrix 206 is then used to select the specific battery 202 which requires balancing.

As shown in figure 3, for the battery 202 at the top of the figure, the secondary side of the bi-directional voltage convertor 208 is connected to the AC balancing bus 210, and the primary side of the bi-directional voltage convertor is connected to battery 202 (via the switching matrix 206 and the monitoring means 204). The other voltage convertor 208', is connected the other way round. That is, the primary side is connected to the balancing bus 210, and the secondary side is connected to the battery 202. Of course, this arrangement may be reversed for each voltage converter.

In operation, any number of cells 202a-202n may be providing charge to the balancing bus 210, which may be recovered to any other of the cells 202a-202n, except the cell that the charge originated from.

The diverted charge has to be diverted by the voltage converters 208, 208' to the balancing bus 210 and cannot simply be diverted within a battery 202 to an alternate cell 202a-202n within the same battery 202.

Whilst the foregoing discussion is related to charging of batteries, the balancing process as described applies equally during the discharge of batteries, thus increasing the overall usable capacity of the battery.

For automotive applications this will provide a higher range for the vehicle on each charge. In addition, as battery cell size increases, active battery balancing becomes more important and, is particularly applicable to large cells that are used for standby power and load levelling. In some cases, this may be used to reduce battery pack size, rather than extending the battery range.

The active battery balancing circuit as described can be used to extend the useful life of a battery, and also during recycling of batteries that have exceeded their life span.

Other variations and modifications will be apparent to the skilled person. Such variations and modifications may involve equivalent and other features that are already known and which may be used instead of, or in addition to, features described herein. Features that are described in the context of separate embodiments may be provided in combination in a single embodiment. Conversely, features that are described in the context of a single embodiment may also be provided separately or in any suitable sub-combination.

## Claims

1. An active battery balancing circuit comprising:
a first battery unit (202) comprising multiple cells (202a... n);
at least one further battery unit (202) comprising multiple cells (202a... n);
separate bi-directional DC-AC voltage converters (208) connected to each battery unit (202) for converting DC to AC in a first direction, and
vice versa in the opposite direction;
an AC balancing bus (210) connecting each voltage converter (208);
and a control microprocessor (212);
wherein said balancing circuit is configured to:
a) provide excess DC current flow from a battery unit (202) to one of said bidirectional voltage converters (208);
b) convert said excess DC current to AC current and provide this to said AC balancing bus (210);
c) provide said excess AC current in said AC balancing bus (210) to one of said bidirectional voltage converters (208);
d) convert said excess AC current to DC current using said bidirectional voltage converter (208) and return said converted DC current to a battery unit 202 that requires additional charge, **characterized in that** said voltage converter (208) is a planar transformer;
wherein said circuit further comprises battery balance monitoring means (204) connected between said battery units (202) and said voltage converters (208) and
wherein said battery balance monitoring means comprises:
monitoring means (204) connected to each said battery unit (202), switch means (206) connected between said monitoring means (204) and said voltage converter (208).

2. An active battery balancing circuit according to claim 1 wherein said monitoring means (204) further comprises a resistor (209) connected to said switch means (206).

3. An active battery balancing circuit according to any preceding claim further comprising control means (212) connected to said AC balancing bus (210).

4. An active battery balancing circuit according to any preceding claim wherein said battery units (200) are Li-ion battery units.

5. An active battery balancing circuit according to any preceding claim comprising a control microprocessor (212) which comprises one or more of a field programmable gate array (FPGA), complex programmable logic device (CPLD) or an application-specific integrated circuit (ASIC).

6. An active battery balancing circuit according to any preceding claims further comprising a separate communication bus (215).

7. An active battery balancing circuit according to any one of claims 1 to 5
wherein said AC balancing bus (210) is configured to operate as a communications bus.

8. A method of balancing a battery using an active battery balancing circuit according to any of the preceding claims, comprising the steps of:
providing power to a first battery unit (202);
diverting excess charge from said first battery unit (202) to a bi-directional DC/AC voltage converter (208) and converting to AC current;
diverting said converted AC current to an AC balancing bus (210);
diverting said AC current from said AC balancing bus (210) to a bi-directional AC/DC voltage converter (208) for conversion to DC current;
diverting said converted DC current to one of the battery units (202).

## Patentansprüche

1. Aktive Batterieausgleichsschaltung, die Folgendes umfasst:
eine erste Batterieeinheit (202), die mehrere Zellen (202a...n) umfasst;
mindestens eine weitere Batterieeinheit (202), die mehrere Zellen (202a...n) umfasst;
getrennte bidirektionale DC/AC-Spannungswandler (208), die mit jeder Batterieeinheit (202) verbunden sind, um Gleichstrom in Wechselstrom in einer ersten Richtung und umgekehrt in der entgegengesetzten Richtung umzuwandeln;
einen AC-Ausgleichsbus (210), der jeden Spannungswandler (208) verbindet;
und einen Steuerungsmikroprozessor (212);
wobei die Ausgleichsschaltung für Folgendes ausgebildet ist:
a) Bereitstellen eines überschüssigen Gleichstromflusses von einer Batterieeinheit (202) zu einem der bidirektionalen Spannungswandler (208);
b) Umwandeln des überschüssigen Gleichstroms in Wechselstrom, und Liefern dieses Wechselstroms an den AC-Ausgleichsbus (210);
c) Liefern des überschüssigen Wechselstroms im AC-Ausgleichsbus (210) an einen der bidirektionalen Spannungswandler (208);
d) Umwandeln des überschüssigen Wechselstroms unter Verwendung des bidirektionalen Spannungswandlers (208) in Gleichstrom, und Zurückführen des umgewandelten Gleichstroms zu einer Batterieeinheit 202, die eine zusätzliche Ladung benötigt, **dadurch gekennzeichnet, dass** der Spannungswandler (208) ein Planartransformator ist;
wobei die Schaltung ferner eine Batteriebalance-Überwachungseinrichtung (204) umfasst, die zwischen den Batterieeinheiten (202) und den Spannungswandlern (208) angeschlossen ist und, wobei die Batteriebalance-Überwachungseinrichtung Folgendes umfasst:
Überwachungseinrichtung (204), die mit jeder Batterieeinheit (202) verbunden ist,
Schalteinrichtung (206), die zwischen der Überwachungseinrichtung (204) und dem Spannungswandler (208) angeschlossen ist.

2. Aktive Batterieausgleichsschaltung gemäß Anspruch 1, wobei die Überwachungseinrichtung (204) ferner einen Widerstand (209) umfasst, der mit der Schalteinrichtung (206) verbunden ist.

3. Aktive Batterieausgleichsschaltung gemäß einem der vorhergehenden Ansprüche, die ferner eine Steuereinrichtung (212) umfasst, die mit dem AC-Ausgleichsbus (210) verbunden ist.

4. Aktive Batterieausgleichsschaltung gemäß einem der vorhergehenden Ansprüche, wobei die Batterieeinheiten (200) Li-Ionen-Batterieeinheiten sind.

5. Aktive Batterieausgleichsschaltung gemäß einem der vorhergehenden Ansprüche, die einen Steuermikroprozessor (212) umfasst, der eines oder mehrere von einem feldprogrammierbaren Gate-Array (FPGA), einer komplexen programmierbaren Logikvorrichtung (CPLD) oder einer anwendungsspezifischen integrierten Schaltung (ASIC) umfasst.

6. Aktive Batterieausgleichsschaltung gemäß einem der vorhergehenden Ansprüche, die ferner einen separaten Kommunikationsbus (215) umfasst.

7. Aktive Batterieausgleichsschaltung gemäß einem der Ansprüche 1 bis 5, wobei der AC-Ausgleichsbus (210) so ausgebildet ist, dass er als Kommunikationsbus arbeitet.

8. Verfahren zum Ausgleichen einer Batterie unter Verwendung einer aktiven Batterieausgleichsschaltung gemäß einem der vorhergehenden Ansprüche, das die folgenden Schritte umfasst:
Versorgen einer ersten Batterieeinheit (202) mit Strom;
Ableiten überschüssiger Ladung von der ersten Batterieeinheit (202) zu einem bidirektionalen DC/AC-Spannungswandler (208) und Umwandeln in Wechselstrom;
Ableiten des umgewandelten Wechselstroms zu einem AC-Ausgleichsbus (210);
Ableiten des Wechselstroms von dem AC-Ausgleichsbus (210) zu einem bidirektionalen AC/DC-Spannungswandler (208) zur Umwandlung in Gleichstrom;
Ableiten des umgewandelten Gleichstroms zu einer der Batterieeinheiten (202).

## Revendications

1. Circuit d'équilibrage de batterie actif comprenant :
une première unité de batterie (202) comprenant de multiples cellules (202a...n) ;
au moins une unité de batterie supplémentaire (202) comprenant de multiples cellules (202a...n) ;
des convertisseurs de tension courant continu/courant alternatif bidirectionnels séparés (208) connectés à chaque unité de batterie (202) pour convertir un courant continu en courant alternatif dans une première direction, et vice versa dans la direction opposée ;
un bus d'équilibrage à courant alternatif (210) connectant chaque convertisseur de tension (208) ; et
un microprocesseur de commande (212) ;
dans lequel ledit circuit d'équilibrage est conçu pour :
a) fournir un flux de courant continu excédentaire à partir d'une unité de batterie (202) à l'un desdits convertisseurs de tension bidirectionnels (208) ;
b) convertir ledit courant continu excédentaire en courant alternatif et fournir ce dernier audit bus d'équilibrage à courant alternatif (210) ;
c) fournir ledit courant alternatif excédentaire dans ledit bus d'équilibrage à courant alternatif (210) à l'un desdits convertisseurs de tension bidirectionnels (208) ;
d) convertir ledit courant alternatif excédentaire en courant continu à l'aide dudit convertisseur de tension bidirectionnel (208) et renvoyer ledit courant continu converti à une unité de batterie (202) qui nécessite une charge supplémentaire, **caractérisé en ce que** ledit convertisseur de tension (208) est un transformateur plan,
dans lequel ledit circuit comprend en outre un moyen de surveillance d'équilibre de batterie (204) connecté entre lesdites unités de batterie (202) et lesdits convertisseurs de tension (208) et
dans lequel ledit moyen de surveillance d'équilibre de batterie comprend :
un moyen de surveillance (204) connecté à chacune desdites unités de batterie (202), et
un moyen de commutation (206) connecté entre ledit moyen de surveillance (204) et ledit convertisseur de tension (208).

2. Circuit d'équilibrage de batterie actif selon la revendication 1, dans lequel ledit moyen de surveillance (204) comprend en outre une résistance (209) connectée audit moyen de commutation (206).

3. Circuit d'équilibrage de batterie actif selon l'une quelconque des revendications précédentes comprenant en outre un moyen de commande (212) connecté audit bus d'équilibrage à courant alternatif (210).

4. Circuit d'équilibrage de batterie actif selon l'une quelconque des revendications précédentes, dans lequel lesdites unités de batterie (200) sont des unités de batterie Li-ion.

5. Circuit d'équilibrage de batterie actif selon l'une quelconque des revendications précédentes, comprenant un microprocesseur de commande (212) qui comprend un ou plusieurs éléments parmi un réseau de portes programmable par l'utilisateur (FPGA), un dispositif logique programmable complexe (CPLD) ou un circuit intégré spécifique d'application (ASIC).

6. Circuit d'équilibrage de batterie actif selon l'une quelconque des revendications précédentes comprenant en outre un bus de communication séparé (215).

7. Circuit d'équilibrage de batterie actif selon l'une quelconque des revendications 1 à 5, dans lequel ledit bus d'équilibrage à courant alternatif (210) est conçu pour fonctionner en tant que bus de communication.

8. Procédé d'équilibrage d'une batterie utilisant un circuit d'équilibrage de batterie actif selon l'une quelconque des revendications précédentes, comprenant les étapes consistant à :
fournir de l'énergie à une première unité de batterie (202) ;
dévier la charge excédentaire de ladite première unité de batterie (202) vers un convertisseur de tension courant continu/courant alternatif bidirectionnel (208) et la convertir en courant alternatif ;
dévier ledit courant alternatif converti vers un bus d'équilibrage à courant alternatif (210) ;
dévier ledit courant alternatif dudit bus d'équilibrage à courant alternatif (210) vers un convertisseur de tension courant alternatif/courant continu bidirectionnel (208) pour sa conversion en courant continu ;
dévier ledit courant continu converti vers l'une des unités de batterie (202).
